# EUROPEAN PATENT APPLICATION

(11) **EP 2 273 148 A1**
(43) Date of publication of application: **12.01.2011**
(21) Application number: 10166352.4
(22) Date of filing: 17.06.2010
(51) Int. Cl.: F16D 65/10, F16D 66/00

(54) **Drum wear indicator**

(30) Priority: 10.07.2009 US 500754
(71) Applicant: ArvinMeritor Technology, LLC, Troy, MI 48084 (US)
(72) Inventor: Jenkinson, Scott, Davisburg, MI 48350 (US); Poquadeck, Dana, White Lake, MI 48383 (US)
(74) Representative: Jones, John Bryn

(57) **Abstract**

A brake drum (10) includes at least one groove (42) formed within an inner braking surface (22). The groove (42) defines a maximum uniform depth that is set at a drum discard diameter. If the groove is visible during inspection it is an indication that the brake drum is still useable. When the groove is no longer visible, the brake drum should be discarded.

## Description

### TECHNICAL FIELD

The subject invention relates to a visual brake drum wear indicator that easily identifies when a brake drum is to be discarded.

### BACKGROUND OF THE INVENTION

A vehicle drum brake assembly includes a brake drum that rotates about an axis. Located within an inner cavity of the brake drum is a non-rotating brake structure that includes brake shoes with brake linings. During a vehicle braking event, the brake shoes bring the brake linings into frictional contact with a braking surface formed as part of an inner surface of the brake drum. Repeated contact between the lining material and the brake drum causes wear in the form of a reduced wall thickness of the drum.

Maintenance inspections require technicians to inspect an inner diameter of the brake drum to determine whether or not the brake drum has reached a maximum discard diameter. This inspection process has proven difficult and time consuming.

### SUMMARY OF THE INVENTION

A brake drum includes a drum body rotatable about an axis and having an outer peripheral surface and an inner peripheral surface that defines a braking surface. A wear indicator feature is formed within the braking surface to provide a visual indicator of when the brake drum is to be discarded.

In one example, the wear indicator feature comprises at least one groove formed within the braking surface. The groove defines a maximum uniform depth that is set at a drum discard diameter. If the groove is visible during inspection it is an indication that the brake drum is still useable. When the groove is no longer visible, the brake drum is to be discarded.

In another example, the at least one groove is comprised of a plurality of grooves that includes at least a first groove and a second groove. Each of the first and second grooves is formed to have a uniform depth along their length. Further, each groove is formed to extend from one lateral edge of the braking surface to an opposite lateral edge of the braking surface.

These and other features of the present invention can be best understood from the following specification and drawings, the following of which is a brief description.

### BRIEF DESCRIPTION OF THE DRAWINGS

Figure 1 is a schematic view of a drum brake assembly.
Figure 2 is a perspective view of a brake drum with a visual wear indicator.
Figure 3 is an enlarged view of a portion of the brake drum of Figure 2.
Figure 4 is a schematic cross-sectional view of the brake drum of Figure 2.
Figure 5 is a perspective view of another example of a brake drum with a visual wear indicator.

### DETAILED DESCRIPTION OF THE PREFERRED EMBODIMENT

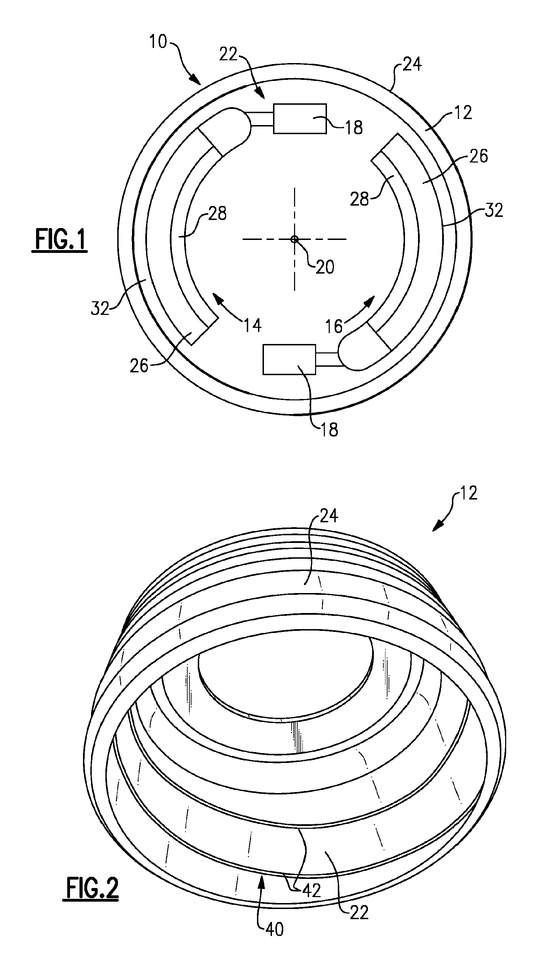

Figure 1 shows a drum brake assembly 10 with a cylindrical brake drum 12 and first 14 and second 16 brake shoe assemblies that are moveable into engagement with the brake drum 12 by an actuator 18. The actuator 18 can be controlled hydraulically or pneumatically as known. The drum brake assembly 10 can utilize any of various types of brake structure such as cams, wedges, or hydraulic cylinders for example. Similarly, the actuator 18 can be any type of actuating mechanism including a cam actuating mechanism, wedge actuating mechanism, or hydraulic cylinder, for example.

The brake drum 12 is rotatable about an axis 20 and has an inner peripheral surface 22 and an outer peripheral surface 24. The brake shoe assemblies 14, 16 are located within an internal cavity of the brake drum 12 adjacent to the inner peripheral surface 22. The brake shoe assemblies 14, 16 include brake linings 26 that are comprised of a friction material attached to a backing plate 28. The inner peripheral surface 22 of the brake drum 12 comprises a braking surface and each braking lining 26 presents a wear surface 32 that contacts the braking surface each time the actuator 18 moves the brake shoe assemblies 14, 16 into contact with the brake drum 12 during a braking event.

The brake drum 12 is shown in greater detail in Figures 2-4. The brake drum 12 can be made from any type of material, and in one example is comprised of a cast composite material. The inner peripheral surface 22 of the brake drum 12 is provided with a visual wear indicator, shown generally at 40, which provides inspectors and technicians with a quick and easy way to visually inspect a brake drum 12 to see if the brake drum 12 has reached a maximum wear limit.

The visual wear indicator 40 comprises a depression, removed section, or groove 42 that is formed within the braking surface of the brake drum 12. In the example shown, the groove 42 is formed in the inner peripheral surface 22 and extends about the complete inner circumference of the drum 12. In one example, the groove 42 is formed to extend along a spiral path, which is best seen in Figure 2.

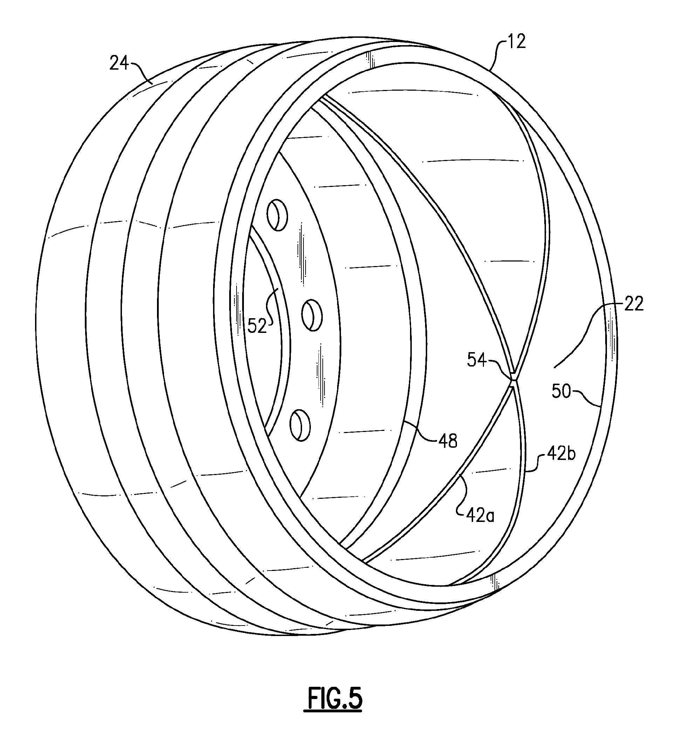

In another example, the brake drum 12 includes a plurality of grooves including at least a first groove 42a and a second groove 42b (see Figure 5). In one example, each of the first 42a and second 42b grooves extends from a first lateral edge 48 of the braking surface to a second, opposite, lateral edge 50 of the braking surface. The first lateral edge 48 is positioned at an inboard location near a wheel mount interface 52 and the second lateral edge 50 is located at an outboard location. In the example shown, the first 42a and second 42b grooves form an X-pattern with the grooves intersecting each other at least at one intersection point 54. Thus, the first 42a and second 42b grooves intersect each other at an obtuse/acute angle to form the X shape.

It should be understood that while an X-shape pattern is shown, the grooves can be orientated to form other types of patterns. Further, it should be understood that one, two, or more than two grooves could be used to form the visual wear indicator.

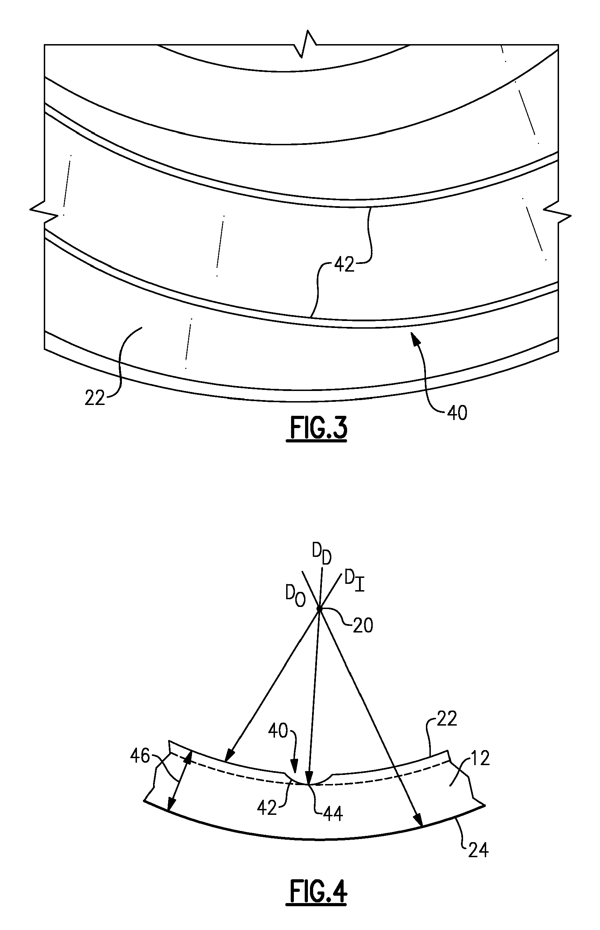

In each of the examples, the grooves 42, 42a, 42b have a bottom surface 44 located at a depth that corresponds to a drum discard diameter DD (Figure 4). The depth is a uniform depth that extends along the length of each of the grooves 42, 42a, 42b. The drum discard diameter DD, which defines the depth, is a predetermined characteristic that is determined based on the type of drum, vehicle application, and other brake and vehicle characteristics. The brake drum 12 has a wall thickness 46 that extends in a radial direction between the inner 22 and outer 24 peripheral surfaces. The inner peripheral surface 22 defines a brake inner diameter DI and the outer peripheral surface 24 defines a brake outer diameter DO. As the brake shoes 14, 16 repeatedly contact the braking surface, i.e. the inner peripheral surface 22, the brake drum 12 wears over time and the wall thickness 46 decreases. When the wall thickness 46 reaches a point where the brake inner diameter DI is approximately equal to the predetermined brake discard diameter DD then the brake drum 12 should be replaced.

Thus, the groove 42 provides a simple and easily noticed visual wear indicator 40 to determine when the brake drum 12 should be replaced. As discussed above, the bottom surface 44 of the groove 42 corresponds to the brake discard diameter DD. As long as the groove 42 is visible, the brake drum 12 is still useful and need not be replaced. However, once any portion of the groove 42 is no longer visible, the brake drum 12 has worn to the discard diameter DD and should be replaced.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A brake drum comprising:
a drum body rotatable about a brake axis and including an outer peripheral surface and an inner peripheral surface that defines a braking surface; and
a depression formed within said braking surface, said depression having a bottom surface located at a depth that corresponds to a drum discard diameter.

2. The brake drum according to claim 1 wherein said depression comprises at least one groove and wherein said depth of said groove comprises a uniform depth along a length of said at least one groove.

3. The brake drum according to claim 2 wherein said at least one groove is formed to extend completely around said inner peripheral surface.

4. The brake drum according to claim 3 wherein said at least one groove extends along a spiral groove path.

5. The brake drum according to claim 2, wherein said drum body defines an initial wall thickness extending radially between said outer peripheral surface and said braking surface and wherein said initial wall thickness is reduced to a discard wall thickness due to wear contact with a non-rotating brake component, said discard wall thickness corresponding to said drum discard diameter.

6. The brake drum according to claim 2, wherein said at least one groove is externally visible for inspection.

7. The brake drum according to claim 6, wherein said depth of said at least one groove decreases over time due to brake wear, and wherein an indication that the brake drum should be discarded is provided when a portion of said at least one groove is no longer visible.

8. The brake drum according to claim 2 wherein said at least one groove comprises a plurality of grooves.

9. The brake drum according to claim 8 wherein said plurality of grooves comprises at least a first groove and a second groove, and wherein each of said first and said second grooves extends from one lateral edge of said braking surface towards an opposite lateral edge of said braking surface.

10. A method of forming a brake wear indicator comprising:
providing a brake drum having an outer peripheral surface and an inner peripheral surface defining a braking surface; and
forming a depression within the braking surface such that the depression has a bottom surface located at a depth that corresponds to a drum discard diameter.

11. The method according to claim 10 wherein the depth of the depression is to decrease over time due to brake wear, and including forming the depression to be visible during an inspection process with an indication that the brake drum is to be discarded corresponding to at least a portion of the depression no longer being visible.

12. The method according to claim 11 including forming the depression as at least one groove wherein the depth of the at least one groove comprises a uniform depth along a length of the at least one groove.

13. The method according to claim 12 including extending the at least one groove completely about the inner peripheral surface.

14. The method according to claim 13 including forming the at least one groove to extend along a spiral path about a brake axis of rotation.

15. The method according to claim 12 including forming the at least one groove as at least a first groove and a second groove, and including forming the first and the second grooves to extend from one lateral edge of the braking surface towards an opposite lateral edge of the braking surface.
